# EUROPEAN PATENT APPLICATION

(11) **EP 4 557 574 A1**
(43) Date of publication of application: **21.05.2025**
(21) Application number: 23839429.0
(22) Date of filing: 22.06.2023
(51) Int. Cl.: H02J 13/00, G05B 23/02, G06Q 50/06, H02J 3/00, H02J 3/38, H02S 50/00

(54) **OPERATING SYSTEM AND PROGRAM**

(30) Priority: 15.07.2022 JP 2022113864; 27.02.2023 JP 2023028310
(71) Applicant: Sustech Inc., Tokyo 105-0014 (JP)
(72) Inventor: TANNO, Yusuke, Tokyo 105-0014 (JP); OHASHI, Akifumi, Tokyo 105-0014 (JP)
(74) Representative: RGTH
(86) International application number: PCT/JP2023/023181
(87) International publication number: WO 2024/014255

(57) **Abstract**

The present invention estimates the occurrence of an abnormality in a power-generating facility. The present invention also estimates a loss due to the abnormality. An acquisition unit acquires an actual performance value of an amount of power generated by the power-generating facility. An estimation unit uses the actual performance value to estimate the occurrence of an abnormality event, on the basis of a characteristic of the amount of power generated corresponding to a prescribed abnormality event occurring in the power-generating facility. A power generation amount estimation unit obtains an estimated value for what the amount of power generated by the power-generating facility would be if the abnormality event had not occurred. A loss estimation unit compares the actual performance value with the estimated value, and thereby estimates a loss amount attributable to the abnormality event.

## Description

### TECHNICAL FIELD

The present invention relates to an operating system and a program.

### BACKGROUND ART

In the prior art, there is a technology related to a management system for solar power generation facility that detects an abnormal power generation facility by collecting and comparing data related to power generation of a plurality of power generation facilities installed in regions considered as having the same amount of sunlight (for example, see Patent Document 1).

### Citation List

### Patent Document

Patent Document 1: Japanese Unexamined Patent Application, Publication No. 2011-147340

### DISCLOSURE OF THE INVENTION

### Problems to be Solved by the Invention

In Patent Document 1, it is possible to detect an abnormal power generation facility. However, the cause of the abnormality is not known by the method of Patent Document 1. In addition, it is not known how much loss occurs due to the abnormality.

The present invention has been made in view of such circumstances, and an object of the present invention is to estimate the occurrence of an abnormality in a power generator. Another object of the present invention is to estimate a loss due to the abnormality.

### Means for Solving the Problems

In order to achieve the above object, an operating system of one aspect of the present invention includes: an acquisition unit that acquires an actual performance value of a power generation amount of a power generator; an estimation unit that, based on a feature of a power generation amount corresponding to a predetermined abnormality event occurring in the power generator, uses the actual performance value to estimate an occurrence of the predetermined abnormality event; a power generation amount estimation unit that obtains an estimated value of a power generation amount of the power generator in a case where the abnormality event has not occurred; and a loss estimation unit that compares the actual performance value and the estimated value with each other to estimate a loss amount due to the abnormality event.

### Effects of the Invention

According to the present invention, it is possible to estimate the occurrence of an abnormality in a power generator. According to the present invention, it is further possible to estimate loss due to the abnormality.

### BRIEF DESCRIPTION OF THE DRAWINGS

FIG. 1 is a block diagram showing an example of an operating system and a configuration of main components included in the operating system according to an embodiment;
FIG. 2 is a flowchart showing an example of processing performed by a processor of an operation device shown in FIG. 1; and
FIG. 3 is a flowchart showing an example of processing performed by a processor of a terminal device shown in FIG. 1.

### PREFERRED MODE FOR CARRYING OUT THE INVENTION

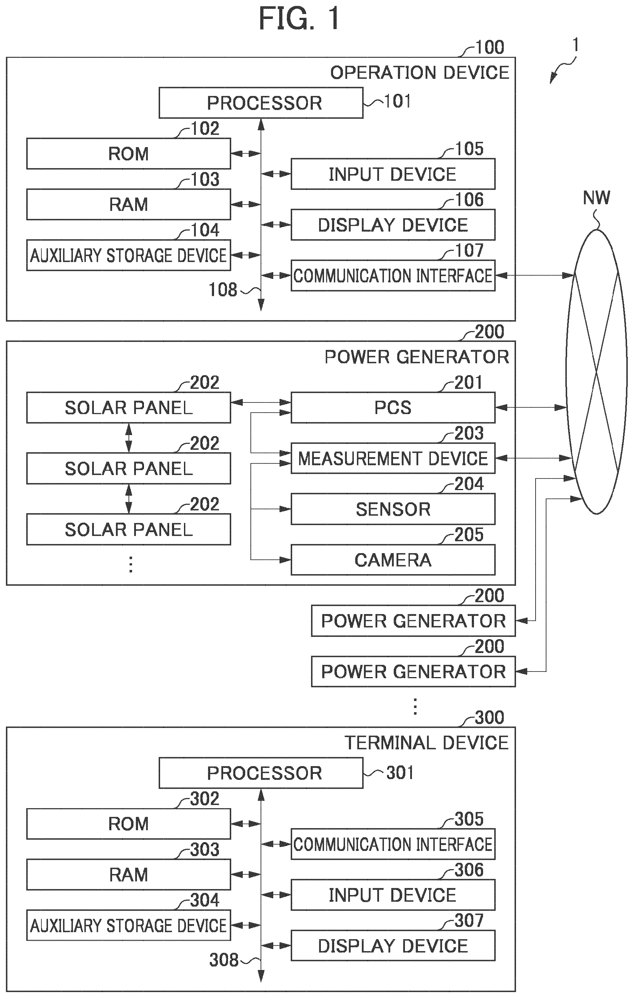

Hereinafter, an operating system according to an embodiment will be described with reference to the drawings. In the drawings used for the following description of the embodiments, the scale of each component may be changed as appropriate. In addition, the drawings used for the following description of the embodiments may be illustrated by omitting a configuration in order for description. In the drawings and the specification, the same reference numerals denote the same elements. FIG. 1 is a block diagram illustrating an example of an operating system 1 and a main configuration of components included in the operating system 1 according to an embodiment. The operating system 1 is a system that operates a power generator 200. The operating system 1 can detect a case where an abnormality occurs in the power generator 200. The operating system 1 includes, as an example, an operation device 100, the power generator 200, and a terminal device 300. The operating system 1 typically includes a plurality of power generators 200 and a plurality of terminal devices 300. However, the number of devices included in the operating system 1 is not limited.

The operation device 100, the power generator 200, and the terminal device 300 are connected to a network NW. The network NW is typically a communication network including the Internet. The network NW is typically a communication network including a wide area network (WAN). The network NW may be a communication network including a private network such as an intranet. The network NW may be a communication network including a local area network (LAN). The network NW may be a wireless, a wired line, or a combination of a wireless and a wired line. The network NW may be a communication network including a dedicated line or a public mobile phone network.

The operation device 100 is a device that operates the power generator 200. The operation device 100 is, for example, a server device. Alternatively, the operation device 100 may be a personal computer (PC) or the like. The operation device 100 may include a plurality of devices. The operation device 100 can detect a case where an abnormality occurs in the power generator 200. The operation device 100 includes, for example, a processor 101, read-only memory (ROM) 102, random-access memory (RAM) 103, an auxiliary storage device 104, an input device 105, a display device 106, and a communication interface 107. A bus 108, etc., connects these units.

The processor 101 is a central unit of a computer that processes calculations, control, and the like necessary for the operation of the operation device 100, and performs various calculations, processes, and the like. The processor 101 may be, for example, a CPU (central processing unit), MPU (micro processing unit), SoC (system on a chip), DSP (digital signal processor), GPU (graphics processing unit), ASIC (application specific integrated circuit), PLD (programmable logic device) or FPGA (field-programmable gate array). Alternatively, the processor 101 is a combination of a plurality of these. In addition, the processor 101 may be a combination of these and a hardware accelerator or the like. The processor 101 controls each unit to realize various functions of the operation device 100 based on programs such as firmware, system software, and application software stored in the ROM 102, the auxiliary storage device 104, or the like. In addition, the processor 101 performs processing described below based on the program. In addition, a part or all of the program may be incorporated in a circuit of the processor 101.

The ROM 102 and the RAM 103 are main storage devices of a computer having the processor 101 as a central unit. The ROM 102 is nonvolatile memory exclusively used for reading data. The ROM 102 stores, for example, firmware among the above-described programs. The ROM 102 also stores data used when the processor 101 performs various types of processing. The RAM 103 is memory used for reading and writing data. The RAM 103 is used as a work area for storing data temporarily used when the processor 101 performs various types of processing. The RAM 103 is typically volatile memory.

The auxiliary storage device 104 is an auxiliary storage device of a computer having the processor 101 as a central unit. The auxiliary storage device 104 is, for example, EEPROM (electric erasable programmable read-only memory), a hard disk drive (HDD), or flash memory. The auxiliary storage device 104 stores, for example, system software and application software among the above-described programs. In addition, the auxiliary storage device 104 stores data used when the processor 101 performs various processes, data generated by processing in the processor 101, various setting values, and the like.

The input device 105 receives an operation by an operator of the operation device 100. The input device 105 is, for example, a keyboard, a keypad, a touch pad, a mouse, or a controller. Further, the input device 105 may be a device for voice input.

The display device 106 displays a screen for notifying the operator of the operation device 100 of various types of information. The display device 106 is, for example, a display such as a liquid crystal display or an organic electro-luminescence (EL) display. A touch panel can also be used as the input device 105 and the display device 106. In other words, a display panel included in the touch panel can be used as the display device 106, and a pointing device by touch input included in the touch panel can be used as the input device 105.

The communication interface 107 is an interface for the operation device 100 to communicate via a network NW or the like.

The bus 108 includes a control bus, an address bus, a data bus, and the like, and transmits signals transmitted and received by each unit of the operation device 100.

The power generator 200 is a facility for performing solar electric power generation. As one example, the power generator 200 includes a PCS (power conditioning subsystem) 201, a solar panel 202, a measurement device 203, a sensor 204, and a camera 205. The power generator 200 typically includes a plurality of solar panels 202. However, the number of each of the PCS 201, the solar panel 202, the measurement device 203, the sensor 204, and the camera 205 included in one power generator 200 is not limited. At least one of the measurement device 203, the sensor 204, and the camera 205 may be located outside the power generator 200.

One or more solar panels 202 are connected to the PCS 201. The PCS 201 has a function of converting electric power generated by the connected solar panel 202 from direct current to alternating current. The PCS 201 has a function of outputting electric power generated by the connected solar panel 202 to a predetermined electric system. The predetermined electric system is an electric system for selling electric power, an electric system for self-use, or the like. The PCS 201 has a function of controlling the connected solar panel 202. Further, the PCS 201 has a function of output curtailment. The output curtailment is to reduce the power generation output by remotely controlling a power generator for the purpose of restricting connection to a power system such as a power generation facility in order for a power company to maintain a balance of power supply and demand. Further, the PCS 201 has a function of measuring and storing various kinds of information of the connected solar panel 202. The various types of information include, for example, various actual performance values (measurement values) such as a power generation amount and a power generation output. For example, the PCS 201 measures and stores various actual performance values at predetermined time intervals. The PCS 201 has a communication function. The PCS 201 is connected to the network NW. The PCS 201 communicates with each device via the network NW.

The solar panel 202 generates electric power by converting light such as sunlight into electric power.

The measurement device 203 collects data measured by the sensors 204 and images captured by the camera 205. To this end, the measurement device 203 acquires measurement data from each sensor 204 and acquires an image from the camera 205. The measurement device 203 inputs the collected measurement data and image to the PCS 201. The measurement device 203 may acquire various measurement data from an external device other than the sensor 204. The PCS 201 may also serve as the measurement device 203. The measurement device 203 is connected to the network NW. The measurement device 203 communicates with each device via the network NW.

The sensor 204 measures various data. Further, the sensor 204 outputs the measured data. The sensor 204 is installed, for example, at an installation location of the solar panel 202. The data measured by the sensor 204 is, for example, temperature, humidity, precipitation amount, snowfall amount, snow accumulation amount, sunshine time, sunlight amount, cloud amount, wind direction, wind speed, and weather. Accordingly, the sensor 204 includes, for example, a thermometer, a hygrometer, a rain gauge, a snow gauge, a snow coverage meter, a sunshine gauge, a pyranometer, a cloud gauge, an anemometer, a weather determination sensor, and the like.

The camera 205 captures an image. Further, the camera 205 outputs captured image data. The camera 205 captures an image of an area including the solar panel 202. The camera 205 may be a monitoring camera. The camera 205 may be a camera capable of capturing an infrared image. In addition, a moving image is one type of image.

The terminal device 300 is a terminal used by an administrator or the like of the power generator 200. The terminal device 300 is, for example, a smartphone, a tablet terminal, a PC, or a digital signage. The terminal device 300 includes, for example, a processor 301, ROM 302, RAM 303, an auxiliary storage device 304, a communication interface 305, an input device 306, and a display device 307. A bus 308 or the like connects these units.

The processor 301 is a central unit of a computer that performs the calculations, control, and the like necessary for the operation of the terminal device 300, and performs various calculations, processes, and the like. The processor 301 is, for example, a CPU, an MPU, an SoC, a DSP, a GPU, an ASIC, a PLD, or an FPGA. Alternatively, the processor 301 is a combination of a plurality of these. In addition, the processor 301 may be a combination of these and a hardware accelerator or the like. The processor 301 controls each unit to realize various functions of the terminal device 300 based on programs such as firmware, system software, and application software stored in the ROM 302, the auxiliary storage device 304, or the like. In addition, the processor 301 performs processing described below based on the program. In addition, a part or all of the program may be incorporated in a circuit of the processor 301.

The auxiliary storage device 304 is an auxiliary storage device of a computer having the processor 301 as a central unit. The auxiliary storage device 304 is, for example, an EEPROM, an HDD, or a flash memory. The auxiliary storage device 304 stores, for example, system software and application software among the above-described programs. In addition, the auxiliary storage device 304 stores data used when the processor 301 performs various kinds of processing, data generated by the processing in the processor 301, various setting values, and the like.

The communication interface 305 is an interface for the terminal device 300 to communicate via the network NW or the like.

The input device 306 receives an operation by the operator of the terminal device 300. The input device 306 is, for example, a keyboard, a keypad, a touch pad, a mouse, or a controller. The input device 306 may be a device for voice input.

The display device 307 displays a screen for notifying the operator of the terminal device 300 of various types of information. The display device 307 is, for example, a display such as a liquid crystal display or an organic EL display. A touch panel can also be used as the input device 306 and the display device 307. In other words, a display panel included in the touch panel can be used as the display device 307, and a pointing device by touch input included in the touch panel can be used as the input device 306.

The bus 308 includes a control bus, an address bus, a data bus, and the like, and transmits signals transmitted and received by each unit of the terminal device 300.

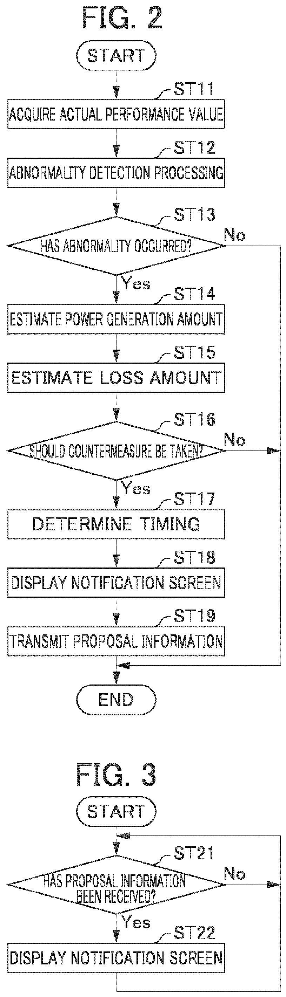

Hereinafter, the operation of the operating system 1 according to the embodiment will be described with reference to FIG. 2 and the like. In addition, the contents of the processing in the following operation description are merely examples, and various types of processing capable of obtaining similar results can be used as appropriate. FIG. 2 is a flowchart illustrating an example of processing performed by the processor 101 of the operation device 100. The processor 101 executes the processing of FIG. 2 based on, for example, a program stored in the ROM 102, the auxiliary storage device 104, or the like. FIG. 3 is a flowchart illustrating an example of processing performed by the processor 301 of the terminal device 300. The processor 301 executes the processing of FIG. 3 based on, for example, a program stored in the ROM 302, the auxiliary storage device 304, or the like.

The processor 101, for example, periodically executes the processing illustrated in FIG. 2. Alternatively, the processor 101 executes the processing illustrated in FIG. 2 when there is an input instructing to execute the processing illustrated in FIG. 2. In addition, the processor 101 executes the processing illustrated in FIG. 2 for each power generator 200.

In Step ST11 of FIG. 2, the processor 101 of the operation device 100 acquires the actual performance value of the power generation amount, various measurement data, and the image from the PCS 201 or the measurement device 203 of the power generator 200 as a processing target. The measurement data is, for example, data measured by the sensor 204. The image is, for example, an image captured by the camera 205. The processor 101 instructs the PCS 201 or the measurement device 203 via the communication interface 107 and the network NW to transmit the actual performance value, the measurement data, and the image. Upon receiving the instruction, the PCS 201 or the measurement device 203 transmits the actual performance value, the measurement data, and the image. The communication interface 107 receives the actual performance value. The processor 101 acquires the received actual performance value, the measurement data, and the image.

Therefore, the processor 101 performs the processing of Step ST11, and thus functions as an example of an acquisition unit that acquires the actual performance value of the power generation amount of the power generator.

In Step ST12, the processor 101 executes abnormality detection processing using the actual performance value acquired in Step ST11. In addition, the processor 101 may execute the abnormality detection processing using at least one of the various measurement data and the image acquired in Step ST11. The abnormality detection processing includes processing of checking whether an abnormality has occurred in the power generator 200. The abnormality detection processing includes processing of estimating the cause of an abnormality occurring in the power generator 200. For example, the processor 101 executes the abnormality detection processing using the transition of the actual performance value of the power generation amount of the power generator 200. The processor 101 may execute the abnormality detection processing using information other than the transition of the actual performance value of the power generation amount.

The transition of the actual performance value of the power generation amount in the normal state will be described with reference to the shape of a graph. Here, the graph is a graph showing a daily actual performance value of the power generation amount for every hour. The graph of the actual performance value of the power generation amount on a sunny day has a shape like a mountain. In the graph, for example, the vertical axis represents the power generation amount and the horizontal axis represents the time. In addition, the graph of the actual performance value of the power generation amount on a cloudy day is largely different in shape from that on a sunny day, and often has a meandering shape having a large variation per time unit and a large number of inflection points. In addition, the graph of the actual performance value of the power generation amount on a cloudy day is generally smaller in value than the graph on a sunny day. In addition, the graph of the actual performance value of the power generation amount on a rainy day is even smaller in value than the graph on a cloudy day, and the graph has a shape of crawling downward.

Next, the transition of the power generation amount in a case where an abnormality has occurred will be described using the shape of the graph. There are three causes of abnormality, for example, malfunction, blocking of sunlight incident on the solar panel 202 by an object, and output curtailment. The malfunction of the power generator 200 is mainly a malfunction of the solar panel 202. Further, a case where an object blocks the sunlight incident on the solar panel 202 also includes a case where the solar panel 202 is dirty. In addition, the classification of the type of abnormality is not limited to those described herein. Each type of abnormality is merely an example of a predetermined abnormality event.

The graph of the power generation amount in a case where the power generator 200 is malfunctioning is different from the graph of the power generation amount in the normal state, and exhibits a peculiar drop in power generation. For this reason, the shape of the graph at the time of malfunction is different from the shape when normal, and at the moment of the occurrence of malfunction, the power generation amount falls directly below, and the power generation amount thereafter continues to be smaller than that when normal, or power generation is not performed. Therefore, the magnitude of the peak power generation amount during the daytime of a sunny day at the time of malfunction is obviously smaller than that when normal. However, in a case where a portion which continues power generation is remaining, the area (the time integral value of the power generation amount) becomes smaller than that of the graph when normal, but the shape is close to that when normal.

The graph of the power generation amount in a case where the sunlight incident on the solar panel 202 is blocked by an object is different from the graph of the power generation amount in the normal state, and exhibits a peculiar drop in power generation. Therefore, the shape of the graph in a case where the sunlight is blocked by an object is different from the shape in the normal state, and the degree of deviation from the normal state changes with the lapse of time if the sunlight is affected by shade, and the power generation amount is constantly reduced if the surface of the solar panel becomes dirty with fallen leaves, bird droppings and the like, such that the area (the time integral value of the power generation amount) is smaller than that of the graph in the normal state. However, in the latter case, the shape is close to that in the normal state.

The graph of the power generation amount in the case of output curtailment is a graph in which the power generation amount rapidly decreases at the moment when the output curtailment is started.

The processor 101 estimates that an abnormality has occurred in the power generator 200 in a case where the transition of the actual performance value of the power generation amount has the graph shape in a case where an abnormality has occurred in the power generator 200, as described above. In addition, the processor 101 estimates that an abnormality has occurred in the power generator 200 when the deviation width between the actual performance value of the power generation amount and a predicted value satisfies a predetermined condition. In addition, the processor 101 estimates whether an abnormality has occurred in the power generator 200 by analyzing an image captured by the camera 205. For example, the processor 101 estimates whether an abnormality has occurred in the power generator 200 by using a situation of foreign matter such as fallen leaves and bird droppings falling on the solar panel 202 and a situation of shade on the solar panel 202. For example, the processor 101 determines that an abnormality has occurred in the power generator 200 when the amount of foreign matter is equal to or larger than a predetermined amount. For example, the processor 101 determines that an abnormality has occurred in the power generator 200 when the area of the shade on the solar panel 202 is equal to or larger than a predetermined area. When the area of the shade is equal to or larger than the predetermined value, it is estimated that there is an obstacle between the sun and the solar panel 202. In addition, the processor 101 may estimate whether an abnormality has occurred in the power generator 200 using two or more among the above-described graph shape, deviation width, and image analysis.

In addition, the processor 101 estimates that the power generator 200 has a malfunction in a case where the transition of the actual performance value of the power generation amount has the graph shape in a case where the power generator 200 has a malfunction. The processor 101 estimates that the sunlight incident on the solar panel 202 is blocked by an object in a case where the transition of the actual performance value of the power generation amount has the graph shape in a case where the sunlight incident on the solar panel 202 is blocked by an object as described above. The processor 101 estimates that output curtailment is performed in a case where the transition of the actual performance value of the power generation amount has the graph shape in a case where output curtailment is performed as described above.

The processor 101 uses, for example, a past actual performance value of the power generator 200 as a processing target for the transition of the power generation amount in the normal state for use in the abnormality detection processing. Alternatively, the processor 101 uses the actual performance value of the power generator 200 different from the power generator 200 as a processing target. The power generator 200 different from the power generator 200 as a processing target is preferably a power generator 200 whose conditions are close to those of the power generator 200 as a processing target. Examples of such conditions include the installation location of the solar panel 202, the date of use or the degree of deterioration of the solar panel 202, the model number indicating the type of the solar panel 202, and the weather of the installation location of the solar panel 202. The closeness of the conditions is, for example, a total value obtained by summing the numerical values of the differences between each condition. In addition, when summing the numerical values, the processor 101 may weight the numerical values according to the importance of each condition to sum them. In addition, the condition being close indicates, for example, that the numerical value is equal to or less than a predetermined threshold value.

In addition, the processor 101 may execute the abnormality detection processing using learned AI (artificial intelligence) or the like. The learning of the AI for the abnormality detection processing (hereinafter, referred to as "abnormality detection Al") is performed by, for example, a device other than the processor 101 or the operation device 100. When using the learned abnormality detection AI by another device, the processor 101 acquires the abnormality detection AI from the other device. The other device may be included in the operating system 1.

For example, actual performance values of a plurality of power generators 200 are used as explanatory variables used for learning the abnormality detection AI. Further, the explanatory variable used for learning the abnormality detection AI may include conditions at the time of power generation. Examples of the conditions at the time of power generation include the installation location of the solar panel 202, the date of use or the degree of deterioration of the solar panel 202, the model number indicating the type of the solar panel 202, and the weather of the installation location of the solar panel 202. The conditions at the time of power generation may be any one or more of these. The conditions at the time of power generation may include other conditions. In addition, as the objective variable used for learning the abnormality detection AI, for example, information is used which indicates whether each actual performance value used as an explanatory variable is in a state in which an abnormality has occurred in the power generator 200, and what kind of abnormality has occurred when the abnormality has occurred. In addition, the objective variable may not be used for learning of the abnormality detection AI.

Further, the processor 101 may execute the abnormality detection processing by using a plurality of methods in combination.

As described above, the processor 101 determines that an abnormality has occurred in the power generator 200, and thus functions as an example of an estimation unit that, based on a feature of the power generation amount corresponding to a predetermined abnormality event occurring in the power generator, uses the actual performance value to estimate the occurrence of the predetermined abnormality event.

In addition, the processor 101 estimates the type of abnormality of the power generator 200, and thus functions as an example of an estimation unit that uses the actual performance value to estimate a type of the abnormality event based on the feature of the power generation amount.

In Step ST13, the processor 101 determines whether an abnormality has occurred in the power generator 200 as a processing target, based on the processing result of Step ST12. In a case where it is not determined that an abnormality has occurred in the power generator 200 as a processing target, the processor 101 determines No in Step ST13 and ends the processing illustrated in FIG. 2. On the other hand, in a case where it is determined that an abnormality has occurred in the power generator 200 as a processing target, the processor 101 determines Yes in Step ST13 and proceeds to Step ST14.

In Step ST14, the processor 101 estimates the power generation amount of the power generator 200 as a processing target in a case where it is assumed that no abnormality has occurred in the power generator 200 as a processing target. For example, the processor 101 estimates the power generation amount from the occurrence of the abnormality to the present time (the processing time point of the processing illustrated in FIG. 2). In addition, the processor 101 estimates the power generation amount from the occurrence of the abnormality to the present time for each time period regardless of whether the power selling unit price is fixed or the power selling unit price fluctuates. Whether the power selling unit price is fixed or fluctuates may vary depending on a contract or the like. The case where the power selling unit price fluctuates is, for example, a case where there is no power selling contract at a fixed unit price, and power is sold in the wholesale electricity market.

For example, the processor 101 estimates the power generation amount in a case where an abnormality has not occurred using a past actual performance value when the power generator 200 as a processing target operated normally. In addition, the processor 101 may perform estimation in consideration of deterioration over time. Alternatively, the processor 101 estimates the power generation amount in a case where an abnormality of the power generator 200 as a processing target has not occurred, using the actual performance value of another power generator 200 different from the power generator 200 as a processing target. At this time, it is preferable that the processor 101 uses the actual performance value of a power generator 200 whose conditions at the time of power generation are close to those of the power generator 200 as a processing target. Examples of the conditions at the time of power generation include the installation location of the solar panel 202, the date of use or the degree of deterioration of the solar panel 202, the model number indicating the manufacturer and the type of the solar panel 202, and the weather of the installation location of the solar panel 202. The conditions at the time of power generation may be any one or more of these. The conditions at the time of power generation may include other conditions.

In addition, the processor 101 may estimate the power generation amount in a case where an abnormality has not occurred using the normalized power generation amount (hereinafter, referred to as "normalized power generation amount") of the solar panel. The normalized power generation amount is a power generation amount per unit area of the solar panel for each condition such as the manufacturer and the model number of the solar panel. The processor 101 determines a normalized power generation amount having a condition close to that of the power generator 200 as a processing target. Then, the processor 101 estimates the power generation amount in a case where an abnormality has not occurred by multiplying the determined normalized power generation amount by the panel area of the power generator 200 as a processing target.

In addition, the processor 101 may estimate the power generation amount in a case where an abnormality has not occurred using the learned AI or the like. Learning of the AI for power generation amount estimation (hereinafter, referred to as "power generation amount estimation Al") is performed, for example, by a device other than the processor 101 or the operation device 100. When the power generation amount estimated AI learned by another device is used, the processor 101 acquires the power generation amount estimation AI. The other device may be included in the operating system 1. In the following description, it is assumed that the processor 101 performs learning.

The explanatory variable used for learning the power generation amount estimation AI is, for example, a condition at the time of power generation. Examples of the conditions at the time of power generation include the installation location of the solar panel 202, the date of use or the degree of deterioration of the solar panel 202, the model number indicating the type of the solar panel 202, and the weather of the installation location of the solar panel 202. The conditions at the time of power generation may be any one or more of these. The conditions at the time of power generation may include other conditions. Further, the objective variable used for learning the power generation amount estimation AI is, for example, an actual performance value of the power generation amount of the power generator 200.

The processor 101 may estimate the power generation amount in a case where an abnormality has not occurred by using a plurality of methods in combination.

In addition, the processor 101 does not use data such as an actual performance value of the period in which the abnormality has occurred as the explanatory variable and the objective variable for use in learning the power generation amount estimation AI for the power generator 200 in which it is determined that the abnormality has occurred in the processing of Step ST12. Alternatively, the processor 101 may correct data in a period in which an abnormality has occurred and may use the corrected data as the explanatory variable and the objective variable.

In addition, the processor 101 may estimate the power generation amount by normalizing a value used to estimate the power generation amount. The value used for the estimation of the power generation amount is a value used by the power generation amount estimation AI, a past actual performance value of the power generator 200 as a processing target, an actual performance value of the power generator 200 whose condition at the time of power generation is close to that of the power generator 200 as a processing target, or the like.

As described above, **the processor 101 performs** the processing of Step ST14, **and thus** functions as an example of the power generation amount estimation unit that obtains the estimated value of the power generation amount of the power generator when the abnormality event has not occurred.

In addition, as described above, the processor 101 functions as an example of a learning unit that excludes the actual performance value in a case where an abnormality has occurred in the learning data for generating a learned model used by the power generation amount estimation unit in order to output the estimated value of the power generation amount, without using the data such as the actual performance value of the power generator 200 in which it is determined that the abnormality has occurred for the learning of the power generation amount estimation AI.

In Step ST15, the processor 101 estimates the loss amount due to the abnormality of the power generator 200. The processor 101 estimates the loss amount by the following expression, for example. (loss amount) = ((expected power selling amount when no abnormality has occurred) - (actual amount of electric power selling)) × (power selling unit price))

The expected power selling amount in a case where no abnormality has occurred can be obtained from, for example, the following expression. (expected power selling amount when no abnormality has occurred) = (power generation amount when no abnormality has occurred) - (actual performance value) Here, the actual performance value of the power generation amount is an actual performance value of the power generation amount in the same period as the expected power selling amount when no abnormality has occurred. Further, the actual performance value of the power generation amount is, for example, acquired in Step ST11.

In a case where the power selling unit price fluctuates, the processor 101 calculates the loss amount by referring to the power unit price in the wholesale electricity market in each time period. In addition, the processor 101 refers to, for example, the power unit price in each time period for each predetermined time. The predetermined time is, for example, 30 minutes.

The processor 101 can use, for example, any of the following (A1) to (A4) as the power unit price in a case where the power selling unit price fluctuates. Among these, (A1) is most preferably used. For example, the processor 101 may use (A2) in a case of simply estimating the loss amount. In addition, the processor 101 may determine which power unit price to use in accordance with, for example, a contract for selling power.
(A1) Area price of spot market
   Preferably, an area price of a location area of the power generator 200 as a processing target.
(A2) System price of spot market
(A3) Price weighted and averaged between the spot market and the pre-hour market
(A4) Power unit price other than (A1) to (A3) above

The processor 101 obtains the loss amount for each time period according to Expression (1), and obtains the total loss amount by adding the loss amount for all time periods within the calculation target period of the loss amount. The calculation target period is, for example, a period from the time when an abnormality occurs to the current time.

In addition, the processor 101 may calculate the loss amount by incorporating the imbalance fee generated in a case where the power is sold in the wholesale electricity market or the like. The imbalance fee in this case is an imbalance fee for excess or deficiency with respect to the plan submission value of electric power. In addition, in a case where the unit price of the imbalance fee is not determined, the processor 101 uses, for example, the unit price of a past imbalance fee. Alternatively, in a case where the unit price of the imbalance fee is not determined, the processor 101 uses the unit price of the imbalance fee predicted using the AI for the imbalance unit price prediction or another program. In a case where the unit price of the imbalance fee has been determined, the processor 101 uses the unit price. The processor 101 calculates the loss amount in consideration of the imbalance fee by the following expression, for example. (loss amount in consideration of imbalance fee) = (loss amount described above) + (insufficient power amount of the power generation performance with respect to the power generation plan submission value) × (unit price of imbalance fee) - (surplus power amount of the power generation performance with respect to the power generation plan submission value) × (unit price of imbalance fee)

In addition, in a case where the cause of the abnormality is a planned cause such as output curtailment, it is preferable that the processor 101 calculates the loss amount as 0 yen. In addition, the processor 101 may exclude the period in which the output curtailment is performed from the calculation target period of the loss amount. As a result, the loss amount in the period in which the output curtailment is performed is 0 yen.

As described above, the processor 101 performs the processing of Step ST15, and thus functions as an example of a loss estimation unit that **compares** the actual performance value and the estimated value with each other to estimate a loss amount due to the abnormality event.

In Step ST16, the processor 101 determines whether a countermeasure should be taken against an abnormality which has occurred in the power generator 200. Here, the countermeasure refers to maintenance, cleaning, repair, replacement, or the like of the power generator 200. For example, the processor 101 determines that it is better to take a countermeasure in a case where the loss amount in a case where a countermeasure has not been taken for a predetermined period of time exceeds the cost for the countermeasure. Alternatively, for example, the processor 101 determines that it is better to take a countermeasure in a case where the loss amount in a case where the countermeasure has not been taken for a predetermined period exceeds the cost for the countermeasure by a predetermined amount or more. Alternatively, for example, the processor 101 determines that it is better to take a countermeasure in a case where a value obtained by multiplying the loss amount in a case where the countermeasure has not been taken for a predetermined period of time exceeds the cost for the countermeasure.

For example, the processor 101 estimates the loss amount in a case where it is assumed that the countermeasure has not been taken for a predetermined period using the loss amount estimated in Step ST15. The loss amount in a case where it is assumed that the countermeasure has not been taken for a predetermined period refers to the loss amount from the present time to a time after a predetermined period. The processor 101 may estimate the loss amount in a case where it is assumed that a countermeasure has not been taken for a predetermined period using the AI or the like. The processor 101 estimates the price of the countermeasure cost based on the type of the abnormality and the degree of the abnormality. The price of the countermeasure cost may be determined in advance according to the type of abnormality, for example. The auxiliary storage device 104 or the like stores the amount of the countermeasure cost set in advance. The processor 101 acquires the price from the auxiliary storage device 104 or the like. In a case where it is not determined that a countermeasure should be taken against the abnormality occurring in the power generator 200, the processor 101 determines No in Step ST16, and ends the processing illustrated in FIG. 2. On the other hand, in a case where it is determined that a countermeasure should be taken against the abnormality occurring in the power generator 200, the processor 101 determines Yes in Step ST16, and proceeds to Step ST17.

As described above, the processor 101 performs the processing of Step ST16, and thus functions as an example of a determination unit that determines that a countermeasure to eliminate an abnormality event should be taken.

In Step ST17, the processor 101 determines the timing at which the countermeasure should be taken. For example, the processor 101 determines, as the time at which the countermeasure should be taken, a day after the next day when the loss amount in a case where the countermeasure has not been taken exceeds the cost for the countermeasure by a predetermined cost amount or more. For example, the processor 101 determines, as the timing at which the countermeasure should be taken, a day after the next day when a value obtained by multiplying the loss amount in a case where the countermeasure has not been taken by a predetermined value exceeds a value obtained by multiplying the cost for the countermeasure by a predetermined value.

Further, the processor 101 may also determine the frequency at which a countermeasure should be taken. For example, in a case of an abnormality that occurs periodically, a countermeasure against the abnormality should also be taken periodically. Thus, the processor 101 determines the frequency at which the countermeasure should be taken in such a case. The frequency is determined in advance for each type of abnormality, for example. The auxiliary storage device 104 or the like stores the frequency determined in advance. The processor 101 acquires the frequency from the auxiliary storage device 104 or the like. Alternatively, the processor 101 may calculate the frequency.

As described above, the processor 101 performs the processing of Step ST17, and thus functions as an example of a timing determination unit that determines the timing or the frequency at which a countermeasure for eliminating an abnormality event should be taken.

In Step ST18, the processor 101 generates an image corresponding to a countermeasure notification screen. Then, the processor 101 instructs the display device 106 to display the generated image. In response to the display instruction, the display device 106 displays the countermeasure notification screen. The countermeasure notification screen includes, for example, content indicating that it is desirable to take a countermeasure with respect to the power generator 200, a content indicating what kind of countermeasure should be taken, and content indicating the timing at which the countermeasure should be taken.

As described above, the processor 101 cooperates with the display device 106 to perform the processing of Step ST18, and thus functions as an example of a determination notification unit that notifies that a countermeasure should be taken when the determination unit determines that a countermeasure should be taken. Alternatively, the processor 101 performs the processing of Step ST18, and thus functions as an example of the determination notification unit.

In addition, the processor 101 cooperates with the display device 106 to perform the processing of Step ST18, and thus functions as an example of a timing notification unit that notifies the timing or the frequency. Alternatively, the processor 101 performs the processing of Step ST18, and thus functions as an example of the timing notification unit.

In Step ST19, the processor 101 generates proposal information. The proposal information is information instructing the terminal device 300 to display a countermeasure notification screen. The proposal information includes information necessary for displaying the countermeasure notification screen. After generating the proposal information, the processor 101 instructs the communication interface 107 to transmit the proposal information to the terminal device 300. In response to this transmission instruction, the communication interface 107 transmits the proposal information to the terminal device 300. The transmitted proposal information is received by the communication interface 305 of the terminal device 300. After the processing of Step ST19, the processor 101 ends the processing illustrated in FIG. 2.

On the other hand, in Step ST21 of FIG. 3, the processor 301 of the terminal device 300 waits for the proposal information to be received by the communication interface 305. When the proposal information is received, the processor 301 determines Yes in Step ST21, and proceeds to Step ST22.

In Step ST22, the processor 301 generates an image corresponding to the countermeasure notification screen. Then, the processor 301 instructs the display device 307 to display the generated image. In response to the display instruction, the display device 307 displays a countermeasure notification screen. After the processing of Step ST22, the processor 301 returns the processing to Step ST21.

As described above, the processor 301 cooperates with the display device 307 to perform the processing of Step ST22, and thus functions as an example of the determination notification unit. Alternatively, the processor 301 performs the processing of Step ST22, and thus functions as an example of the determination notification unit. Alternatively, the processor 101 performs the processing of ST19 of FIG. 2, and thus functions as an example of the determination notification unit. Alternatively, the processor 101 cooperates with the communication interface 107 to perform the processing of Step ST19, and thus functions as an example of the determination notification unit.

In addition, the processor 301 cooperates with the display device 307 to perform the processing of Step ST22 of FIG. 3, and thus functions as an example of a timing notification unit. Alternatively, the processor 101 performs the processing of Step ST22, and thus functions as an example of the timing notification unit. Alternatively, the processor 101 performs the processing of Step ST19 of FIG. 2, and thus functions as an example of the timing notification unit. Alternatively, the processor 101 cooperates with the communication interface 107 to perform the processing of Step ST19, and thus functions as an example of the timing notification unit.

The operating system 1 according to the embodiment acquires the actual performance value of the power generation amount of the power generator 200. Then, the operating system 1 of the embodiment estimates the occurrence of the abnormality using the feature of the power generation amount and the actual performance value in a case where the abnormality has occurred. Furthermore, the operating system 1 according to the embodiment estimates the loss amount due to the occurrence of an abnormality by obtaining an estimated value of the power generation amount when no abnormality has occurred. Therefore, it is possible for the administrator or the like of the power generator 200 to recognize the price of the opportunity loss caused by the occurrence of the abnormality in the power generator 200 by using the operating system 1 of the embodiment.

In addition, the operating system 1 of the embodiment specifies the type of abnormality by using the features and the actual performance value of the power generation amount in a case where the abnormality has occurred. With such a configuration, it is possible for the administrator or the like of the power generator 200 to recognize the type of abnormality in the power generator 200 in a case where the abnormality has occurred by using the operating system 1 of the embodiment.

In addition, the operating system 1 of the embodiment obtains the estimated value of the power generation amount in a case where no abnormality has occurred using the AI. In addition, the operating system 1 of the embodiment does not use data such as the actual performance value of the power generation amount of the power generator 200 in which the abnormality has occurred in the learning of the AI. This improves the accuracy of the AI. Alternatively, in the learning of the AI, the operating system 1 of the embodiment corrects and uses data such as the actual performance value of the power generation amount of the power generator 200 in which the abnormality has occurred. This improves the accuracy of the AI.

In addition, the operating system 1 of the embodiment uses at least one selected from the AI, the past actual performance value of the power generator 200 as a processing target, and the actual performance value of another power generator having a condition close to that of the power generator 200, for the purpose of estimating the power generation amount. With such a configuration, it is possible for the operating system 1 of the embodiment to estimate the power generation amount with higher accuracy.

In addition, the operating system 1 of the embodiment estimates whether a countermeasure should be taken in a case where an abnormality has occurred. With such a configuration, the administrator or the like of the power generator 200 can know whether a countermeasure should be taken for the power generator 200 in which an abnormality has occurred, by using the operating system 1 of the embodiment.

In addition, the operating system 1 of the embodiment determines the timing or the frequency at which a countermeasure should be taken in a case where an abnormality has occurred. With such a configuration, the administrator or the like of the power generator 200 can recognize the timing or the frequency at which a countermeasure should be taken in a case where an abnormality has occurred, by using the operating system 1 of the embodiment.

The above embodiments may be modified as follows. In the above embodiments, the operation device 100 determines the occurrence of an abnormality and the type of abnormality using the shape of the graph. However, the operation device 100 may determine the occurrence of an abnormality and the type of abnormality using a feature of the power generation amount other than the shape of the graph.

In the above-described embodiments, the operation device 100 performs the abnormality detection processing using the power generation amount. The operation device 100 may perform the abnormality detection processing using the power generation output (power generation amount per unit time) instead of the power generation amount.

The operation device 100 may acquire the actual performance value of the power generation amount of the power generator 200 from a device other than the PCS 201 and the measurement device 203.

In the above embodiments, the power generator 200 performs solar electric power generation. However, the power generator of the embodiments may be a facility that performs power generation other than solar electric power generation such as wind power generation, hydroelectric power generation, thermal power generation, nuclear power generation, and geothermal power generation.

The processor 101 may realize a part or all of the processing realized by the program in the above embodiments by the hardware configuration of a circuit.

The program for realizing the processing of the embodiment is transferred in a state of being stored in an device, for example. However, the device may be transferred in a state in which the program is not stored. Then, the program may be separately transferred and written to the device. The transfer of the program at this time can be realized by, for example, recording the program in a removable storage medium or downloading the program via a network such as the Internet or a LAN.

While embodiments of the present invention have been described, these embodiments have been presented by way of example only, and are not intended to limit the scope of the invention. The embodiments of the present invention can be implemented in various modes without departing from the gist of the present invention.

### EXPLANATION OF REFERENCE NUMERALS

1 operating system
100 operation device
101,301 processor
102,302 ROM
103,303 RAM
104,304 auxiliary storage device
105,306 input device
106,307 display device
107,305 communication interface
108,308 bus
200 power generator
201 PCS
202 solar panel
203 measurement device
204 sensor
205 camera
300 terminal device

## Claims

1. An operating system comprising:
an acquisition unit that acquires an actual performance value of a power generation amount of a power generator;
an estimation unit that, based on a feature of a power generation amount corresponding to a predetermined abnormality event occurring in the power generator, uses the actual performance value to estimate an occurrence of the predetermined abnormality event;
a power generation amount estimation unit that obtains an estimated value of a power generation amount of the power generator in a case where the abnormality event has not occurred; and
a loss estimation unit that compares the actual performance value and the estimated value with each other to estimate a loss amount due to the abnormality event.

2. The operating system according to claim 1, wherein, based on the feature, the estimation unit uses the actual performance value to estimate a type of the abnormality event.

3. The operating system according to claim 1, further comprising a learning unit that excludes the actual performance value in a case where the abnormality event has occurred in learning data for generating a learned model used by the power generation amount estimation unit in order to output the estimated value of the power generation amount.

4. The operating system according to claim 1, wherein the power generation amount estimation unit performs estimation using at least one selected from AI, a past actual performance value of the power generator, and an actual performance value of a power generation amount of another power generator that has operated with a condition close to that of the power generator.

5. The operating system according to claim 1, further comprising a determination unit that determines that a countermeasure to eliminate the abnormality event should be taken.

6. The operating system according to claim 5, further comprising a determination notification unit that, in a case where the determination unit has determined that the countermeasure should be taken, notifies that the countermeasure should be taken.

7. The operating system according to claim 1, further comprising a timing determination unit that determines a timing or a frequency at which the countermeasure for eliminating the abnormality event should be taken.

8. The operating system according to claim 7, further comprising a timing notification unit that notifies the timing or the frequency.

9. A program that causes a processor included in an operating device to function as:
an acquisition unit that acquires an actual performance value of a power generation amount of a power generator;
an estimation unit that, based on a feature of a power generation amount corresponding to a predetermined abnormality event occurring in the power generator, uses the actual performance value to estimate an occurrence of the predetermined abnormality event;
a power generation amount estimation unit that obtains an estimated value of a power generation amount of the power generator in a case where the abnormality event has not occurred; and
a loss estimation unit that compares the actual performance value and the estimated value with each other to estimate a loss amount due to the abnormality event.
